# FASCICULE DE BREVET EUROPEEN

(11) **EP 2 101 924 B1**
(45) Date de publication et mention de la délivrance du brevet: **17.08.2011**
(21) Numéro de dépôt: 07871797.2
(22) Date de dépôt: 05.12.2007
(51) Int. Cl.: B05B 9/08, A01M 7/00

(54) **PULVERISATEUR PORTATIF**
TRAGBARE SPRÜHVORRICHTUNG
PORTABLE SPRAYER

(30) Priorité: 05.12.2006 FR 0610597
(43) Date de publication de la demande: 23.09.2009
(73) Titulaire: EXEL INDUSTRIES, 51200 Epernay (FR)
(72) Inventeur: BALLU, Patrick, F-51100 Reims (FR)
(74) Mandataire: Myon, Gérard Jean-Pierre
(86) Numéro de dépôt international: PCT/FR2007/002001
(87) Numéro de publication internationale: WO 2008/087268

(56) Documents cités:
- WO-A-03/101620
- WO-A1-03/101620
- DE-C- 876 780
- DE-C- 3 606 018
- DE-C1- 3 606 018
- FR-A- 1 334 478
- FR-A3- 2 859 925
- JP-A- 10 052 207
- JP-A- 2005 081 205
- US-A- 4 035 004
- US-A- 6 109 548
- US-A1- 2005 230 426

## Description

La présente invention se rapporte à un pulvérisateur portatif.

On connaît de la technique antérieure un pulvérisateur portatif, du type comprenant un réservoir et un couvercle monté de manière amovible sur ce réservoir, ce couvercle comprenant des moyens de mise sous pression dudit réservoir, une conduite plongeant dans ledit réservoir, une buse de pulvérisation, et un interrupteur hydraulique apte à mettre de manière sélective ladite conduite en communication hydraulique avec ladite buse.

Un tel pulvérisateur permet de traiter de manière localisée des plantes au moyen de produits phytosanitaires appropriés (insecticides, mycocides, etc.).

US-A-2005/230 426 décrit un pulvérisateur portatif selon le préambule de la revendication 1, dont la buse est reliée au réservoir par un bec de forme relativement courte et droite. Un tel bec est peu protubérant par rapport au réservoir, si bien qu'il ne permet qu'un accès restreint de la buse de pulvérisation à des zones peu accessibles des plantes. Par ailleurs, le pulvérisateur de US-A-2005/230426 comprend, comme le montrent les figures 31 à 39, une durite s'étendant à l'intérieur du bec et reliant l'interrupteur hydraulique et la buse. Compte tenu de la forme droite et courte du bec, cette durite doit former un coude avec un angle marqué de 90° pour pouvoir relier le réservoir à la buse. Or, un tel angle risque d'entraîner la formation de bulles d'air et engendre une perte de charge relativement élevée, ce qui réduit l'efficacité de la pulvérisation. En outre, un décollement est susceptible d'être généré sur la portion intérieure de la durite juste en aval de son coude à 90°. Un tel décollement risque de provoquer la sédimentation de particules éventuellement présentes dans le produit à pulvériser, cette sédimentation entraînant une perte de charge supplémentaire et un encrassement dans la durite. En outre, la forme anguleuse de la durite la rend relativement difficile à nettoyer.

La présente invention a notamment pour but de faciliter l'accès du point de pulvérisation du pulvérisateur à des zones peu accessibles des plantes, comme par exemple à une rangée de plantes située derrière une rangée de rosiers, qu'il est difficile d'atteindre sans risquer de s'égratigner les mains sur les épines des rosiers.

On atteint ce but de l'invention avec un pulvérisateur portatif, selon la revendication 1.

Par « forme allongée », on entend dans le cadre de la présente invention un bec significativement protubérant par rapport au volume défini par le corps du pulvérisateur. A titre indicatif, un tel bec peut avoir une longueur du même ordre de grandeur que le diamètre du réservoir du pulvérisateur, c'est-à-dire typiquement une longueur comprise entre 10 et 20 cm (ceci n'étant bien évidemment nullement limitatif).

Grâce à la présence d'un tel bec, le pulvérisateur selon l'invention permet d'accéder à des zones peu accessibles des plantes à traiter, et ainsi de réaliser une pulvérisation très ciblée et donc efficace.

Suivant une autre caractéristique optionnelle de ce pulvérisateur selon l'invention,

La présence d'une telle durite permet d'assurer une parfaite étanchéité tout le long du trajet du fluide entre l'interrupteur hydraulique et la buse, et ce quelle que soit la forme (longueur, courbure) du bec. Le bec peut en effet présenter des longueurs et/ou des courbures diverses, selon les applications visées. Comme la durite s'étend à l'intérieur du bec de forme allongée et courbe, elle présente aussi une forme courbe ou incurvée, c'est-à-dire une forme avec un rayon de courbure non infini et non nul. Une telle forme de la durite limite les pertes de charge et les décollements de l'écoulement, donc la sédimentation et l'encrassage dans la durite. Une telle-durite permet donc une pulvérisation efficace. Cette forme de la durite évite également la formation de bulles d'air, lesquelles dégraderaient autrement la qualité de pulvérisation. De plus, la durite est facile à nettoyer, puisqu'elle ne présente pas d'angle marqué, mais une courbure suivant celle du bec.

La présence d'une telle durite permet donc d'adopter n'importe quel design pour le bec, et d'optimiser sa forme du point de vue de l'ergonomie pour l'utilisateur.

Cette durite permet en outre de se libérer des contraintes habituelles de fabrication par moulage : la fabrication d'une durite moulée équivalente nécessiterait en effet la réalisation de deux parties moulées complémentaires comprenant chacune une moitié (prise dans le sens de la longueur) de durite, et l'étanchéité de la durite résultant de l'assemblage de ces deux parties moulées complémentaires serait difficile, voire impossible à obtenir.

Suivant d'autres caractéristiques optionnelles du pulvérisateur selon l'invention :
- la durite est formée par une conduite souple ;
- ledit bec est formé en deux parties comportant des nervures de maintien de ladite durite,
- lesdites nervures comprennent d'une part des nervures axiales de maintien latéral de ladite durite, et d'autre part des nervures transversales de maintien axial de la connexion de ladite durite avec ledit interrupteur hydraulique,
- ledit bec et ladite buse présentent des formes complémentaires définissant une rotule, et ladite durite traverse cette rotule,
- ce pulvérisateur comprend une allonge apte à être interposée de manière étanche entre ledit bec et ladite buse, ladite durite débouchant à l'intérieur de cette allonge,
- ladite allonge est rangeable soit entre une poignée de préhension dudit pulvérisateur et ledit réservoir, soit le long dudit réservoir,

ladite allonge et ladite buse présentent des formes complémentaires définissant une deuxième rotule, et une deuxième durite traverse cette deuxième rotule,
- ce pulvérisateur comprend une collerette de protection montée de manière amovible autour de ladite buse,
- ladite collerette est rangeable sur ledit bec de manière que sa concavité soit orientée vers ledit réservoir,
- lesdits moyens de mise sous pression comprennent une tige de pompage munie d'un pommeau asymétrique,
- ledit pulvérisateur comprend une soupape de sécurité à bascule montée sur ledit couvercle,
- ladite soupape comprend un plateau supportant d'une part, au voisinage de l'une de ses extrémités, disposés de part et d'autre de ce plateau et sensiblement dans le prolongement l'un de l'autre, un doigt d'actionnement et un pion d'appui, et d'autre part, au voisinage d'une autre extrémité dudit plateau, disposés de part et d'autre de celui-ci et sensiblement dans le prolongement l'un de l'autre, un ergot de centrage et un ergot d'obturation, ledit ergot d'obturation coopérant par l'intermédiaire d'un joint d'étanchéité avec un siège de soupape débouchant dans ledit réservoir et ledit ergot de centrage coopérant avec un ressort de rappel dudit plateau vers la position dans laquelle ledit ergot d'obturation comprime ledit joint contre ledit siège.

D'autres caractéristiques et avantages de la présente invention apparaîtront à la lumière de la description qui va suivre et à l'examen des figures ci-annexées, dans lesquelles :
- la figure 1 est une vue de face d'un pulvérisateur portatif selon l'invention,
- la figure 2 est une vue en coupe axiale de ce pulvérisateur portatif,
- la figure 3 est une vue de dessus en perspective de ce pulvérisateur, les organes situés dans la partie supérieure de ce pulvérisateur ayant été ôtés,
- les figures 4A et 4B sont des vues en perspective respectivement de dessus et de dessous de celui parmi lesdits organes supérieurs qui entrent dans la constitution du bec allongé du pulvérisateur selon l'invention,
- la figure 5 est une vue en perspective de celui parmi lesdits organes supérieurs qui permet l'actionnement d'un interrupteur hydraulique du pulvérisateur selon l'invention,
- la .figure 6 est une vue de face du pulvérisateur selon l'invention, équipé d'accessoires disposés en position de rangement,
- la figure 7 est une vue en perspective du pulvérisateur selon l'invention, lesdits accessoires étant représentés en position d'utilisation,
- la figure 8 est une vue détaillée de la zone VIII de la figure 6 représentée en semi-transparence,
- la figure 9 est une vue détaillée de la zone IX de la figure 8, permettant de visualiser une soupape du pulvérisateur selon l'invention,
- les figures 10A et 10B sont des vues schématiques de cette soupape, respectivement en modes de fonctionnement de sécurité et d'actionnement volontaire,
- la .figure 11 est une vue analogue à la figure 2 d'une variante du pulvérisateur selon l'invention,
- la figure 12 est une vue détaillée en perspective de la zone XII de la figure 11,
- la figure 13 est une vue du pulvérisateur de la figure 11 auquel il a été adjoint une allonge.

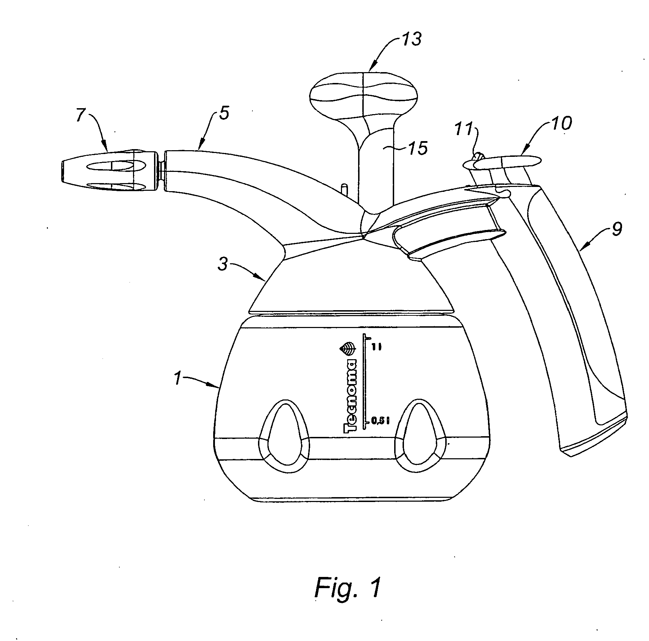

On se reporte à présent à la figure 1, sur laquelle on peut voir que le pulvérisateur portatif selon l'invention comprend un réservoir 1 surmonté d'un couvercle 3 muni d'un bec de forme allongée et courbe 5 à l'extrémité duquel se trouve une buse de pulvérisation 7.

Une poignée de préhension 9 est solidaire du couvercle 3 à l'opposé du bec 5, et comporte dans sa partie supérieure un organe 10 d'actionnement de la pulvérisation muni d'un organe de blocage 11.

Sur le couvercle 3 est également monté un pommeau de pompage 13 de forme asymétrique, relié à une tige de pompage 15.

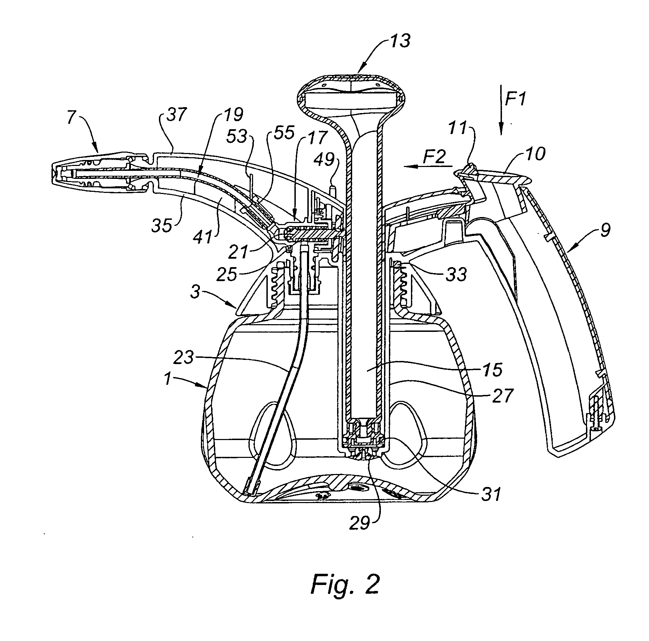

En se reportant à présent à la figure 2, on voit que la buse de pulvérisation 7 est reliée à un interrupteur hydraulique 17 par une conduite souple 19 formant durite. On voit également que la durite 19, qui s'étend à l'intérieur du bec 5 de forme allongée et courbe, présente une forme courbe ou incurvée avec un rayon de courbure modéré, non nul et non infini.

La durite 19 s'étend depuis l'interrupteur hydraulique 17 selon une direction oblique ascendante jusqu'à la buse de pulvérisation 7, à laquelle la durite 19 est raccordée selon une direction horizontale lorsque le réservoir repose sur un plan horizontal. Comme mentionné ci-dessus, une telle forme de la durite 19 en limite les pertes de charges, évite les décollements et les bulles d'air et facilite le nettoyage et la montage de la durite 19.

Comme cela est connu en soi, l'interrupteur hydraulique 17 comporte un piston 21 mobile entre une positon fermée dans laquelle il empêche la circulation de fluide entre une conduite plongeuse 23 s'étendant jusqu'au fond du réservoir 1 et la durite 19, et une position ouverte dans laquelle il autorise cette circulation de fluide.

Le piston 21 est rappelé dans sa position fermée par un ressort 25, et il peut être actionné vers sa position ouverte sous l'effet d'une pression sur l'organe d'actionnement 10 dans le sens indiqué par la flèche F1 visible sur la figure 2.

Le maintien de cet organe d'actionnement 10 en position appuyée peut être obtenu en agissant sur l'organe de blocage 11 dans le sens indiqué par la flèche F2.

La tige 15 reliée au pommeau 13 s'étend à l'intérieur d'un cylindre 27 solidaire du couvercle 3, et munie à son extrémité d'un clapet anti-retour 29 connu en soi.

Un joint 31 assure l'étanchéité de la zone s'étendant entre la partie inférieure de la tige 15 et le clapet 29.

De même, un joint d'étanchéité 33 assure l'étanchéité de la liaison entre le couvercle 3 et le réservoir 1, celui-là étant vissé sur celui-ci.

On notera que le bec 5 du couvercle 3 est en fait formé de deux parties, l'une inférieure 35 solidaire du couvercle 3 et l'autre supérieure 37 rapportée sur cette partie inférieure. Cet assemblage des parties 35 et 37 permet un accès aisé aux différents composants se trouvant à l'intérieur du bec 5 et facilite la mise en place de la durite 19.

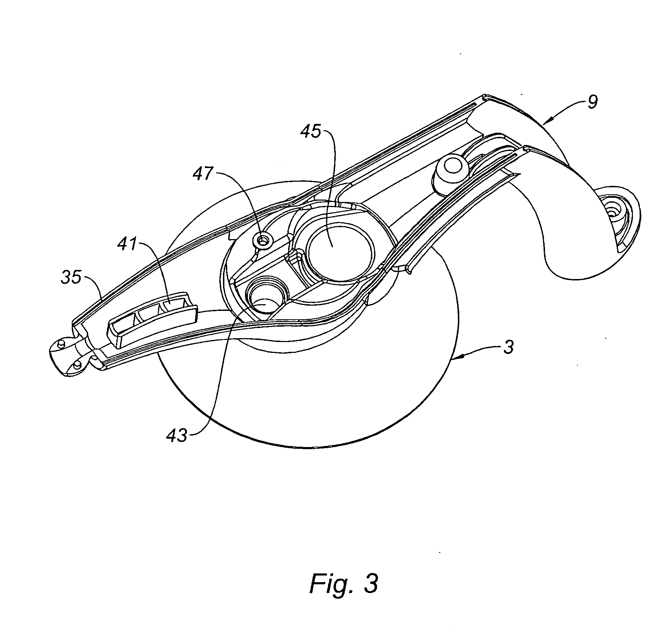

La partie inférieure 35 est particulièrement visible sur la figure 3.

Cette partie inférieure incorpore deux nervures 41 s'étendant selon la direction axiale de la durite 19, et disposées de part et d'autre de cette durite de manière à assurer sa mise en place et son maintien.

On notera au passage que l'on peut apercevoir sur la figure 3 un orifice 43 permettant la mise en place de l'interrupteur hydraulique 17, un orifice 45 par lequel débouche le cylindre 27, ainsi qu'un orifice 47 permettant le passage d'un doigt d'actionnement 49 de soupape au sujet de laquelle une explication détaillée sera donnée dans ce qui suit.

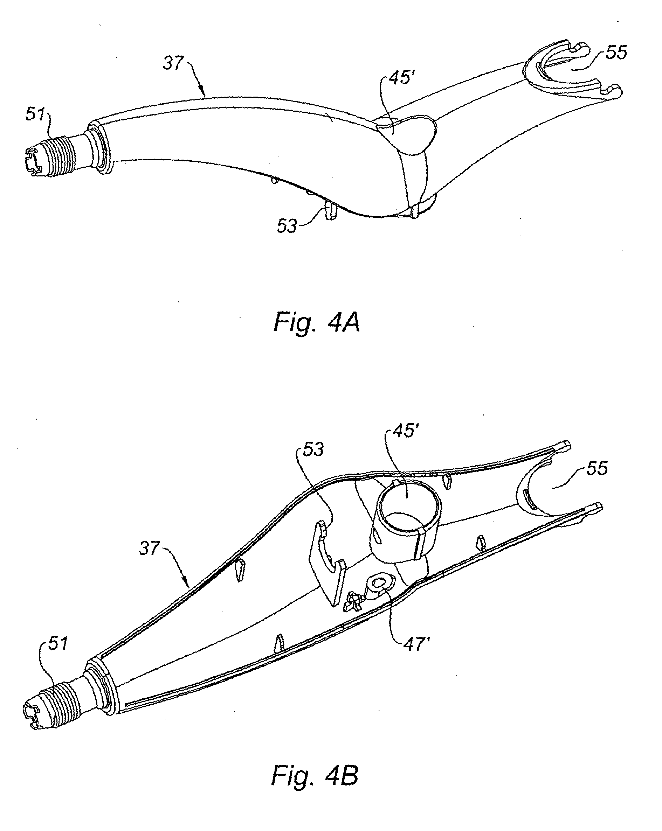

En se rapportant aux figures 4A et 4B, on peut voir que la partie supérieure 37 du bec 5 incorpore un filetage 51 destiné à recevoir la buse 7, et comporte une nervure 53 disposée transversalement à la durite 19 de manière à maintenir un appui sur un collier 55 de cette durite (voir figure 2) et garantir ainsi la bonne connexion de cette durite avec l'interrupteur hydraulique 17.

Les orifices 45' et 47' formés sur la partie supérieure 37 du bec 5 sont destinés à correspondre respectivement aux orifices 45 et 47 visibles à la figure 3.

L'échancrure 55 visible sur les figures 4A et 4B permet la mise en place de l'organe d'actionnement 10 (voir figure 2).

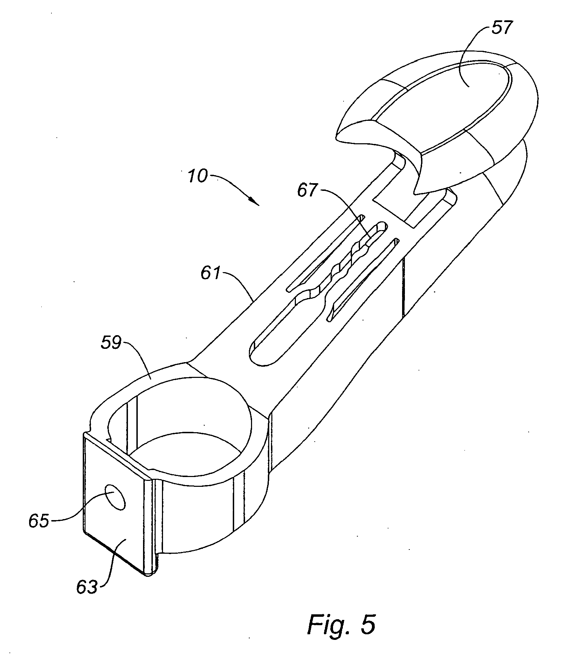

Cet organe d'actionnement 10 est d'ailleurs représenté en perspective de manière détaillée sur la figure 5.

On voit que cet organe d'actionnement comporte un bouton poussoir 57 relié à une bague 59 par l'intermédiaire d'un bras 61.

La bague 59 comporte elle-même une platine 63 munie d'un orifice 65 destiné à coopérer avec l'extrémité du piston 21 (voir figure 2), de manière qu'un appui sur le bouton poussoir 57 ait pour effet d'exercer un effort de traction sur ce piston, faisant passer de la sorte l'interrupteur hydraulique 17 de sa position fermée (interruption de la circulation de fluide) à sa position ouverte (autorisation de la circulation de fluide).

Les rainures 67 formées dans le bras 61 permettent la mise en place de l'organe de blocage 11 (voir figure 2).

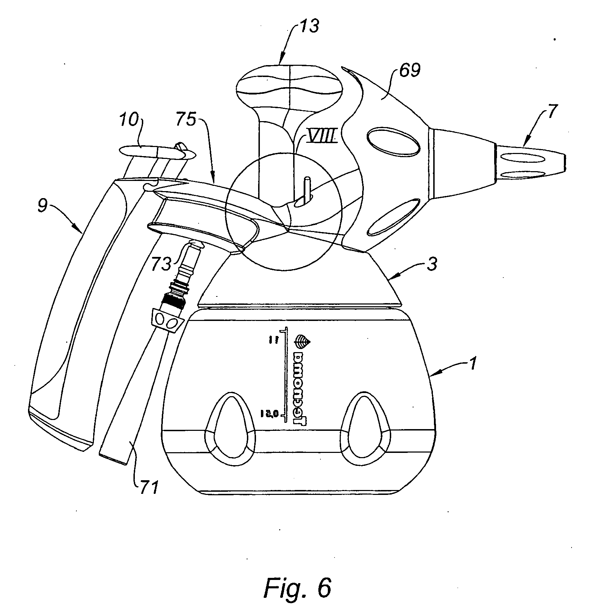

On a représenté sur la figure 6 le pulvérisateur selon l'invention muni d'accessoires en position de rangement.

Ces accessoires comprennent d'une part une collerette 69 formée de préférence dans un matériau transparent, et d'autre part une allonge 71.

En position de rangement, la collerette 69 est fixée à l'extrémité du bec 5 comme représenté sur la figure 6, c'est-à-dire de manière que sa concavité soit orientée vers le pommeau 13.

D'autre part, en position de rangement, l'allonge 71 est disposée comme représenté sur la figure 6, c'est-à-dire entre le réservoir 1 et la poignée 9, et est maintenue dans cette position en coopérant, par exemple, avec un orifice 73 formé dans la partie 75 qui relie la poignée 9 au réservoir 1.

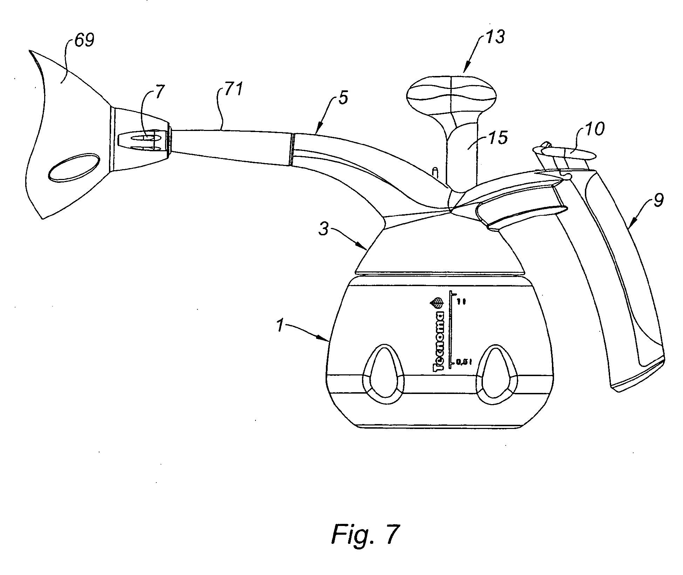

Sur la figure 7, on peut voir les accessoires 69 et 71 en situation d'utilisation.

Plus précisément, on peut voir que l'allonge 71 a été vissée à l'extrémité du bec 5 à la place de la buse 7, et que cette buse a été elle-même vissée à l'extrémité de cette allonge 71.

On peut voir également que la collerette 69 a été fixée entre l'allonge 71 et la buse 7, de manière que la concavité de cette collerette soit orientée à l'opposé du pommeau 13.

A noter que cette collerette 69 pourrait être utilisée même en l'absence de l'allonge 71, c'est-à-dire qu'elle pourrait être disposée directement entre le bec 5 et la buse 7.

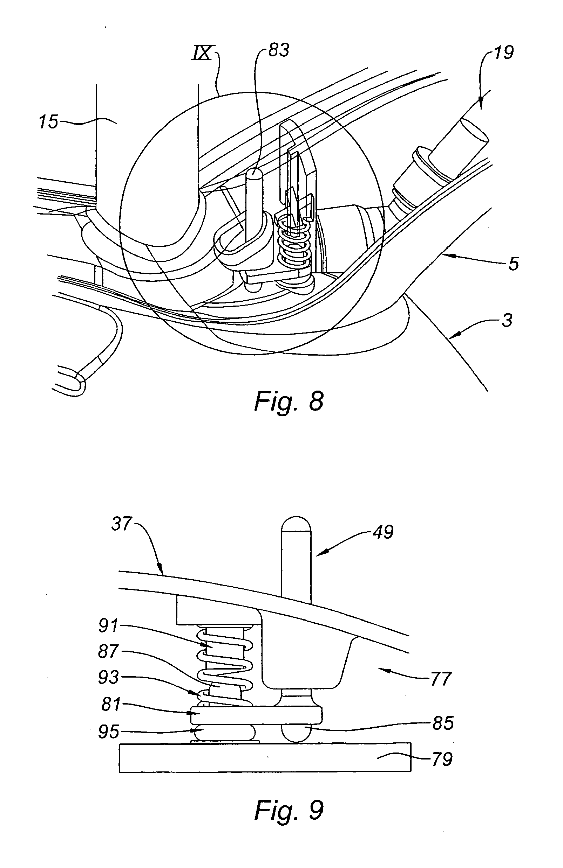

On se reporte maintenant aux figures 8 à 10B sur lesquelles on a représenté une soupape de conception très simplifiée intégrée au couvercle 3 du pulvérisateur selon l'invention.

Comme cela est visible sur la figure 9, cette soupape 77 est disposée entre une paroi 79 du couvercle 3 qui ferme le réservoir 1 et la partie supérieure 37 du bec 5.

Cette soupape comprend un plateau 81 supportant d'une part un doigt d'actionnement 49 et d'autre part un pion d'appui 85.

Ce doigt d'actionnement 49 et ce pion 85 sont disposés sensiblement dans le prolongement l'un de l'autre, au voisinage de l'une des extrémités du plateau 81.

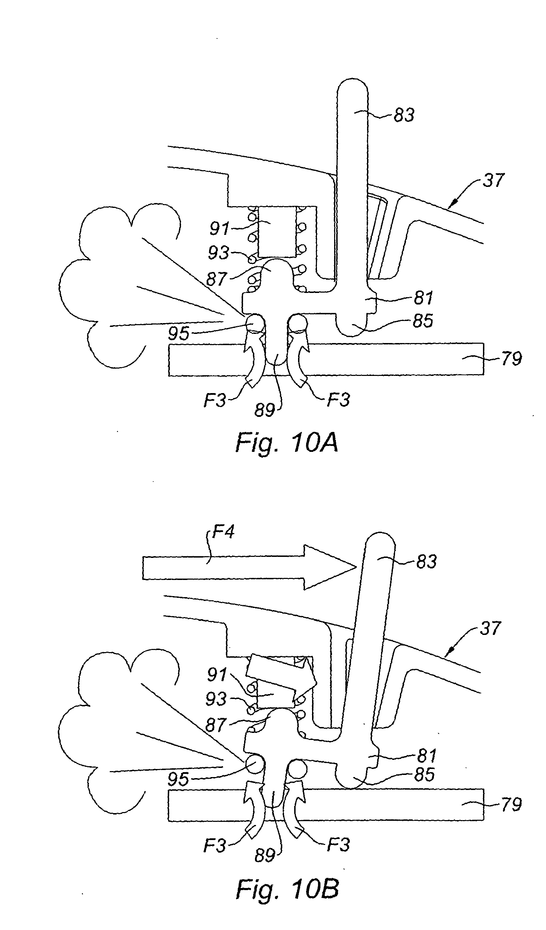

Au voisinage de l'autre extrémité de ce plateau se trouvent un ergot de centrage 87 et un ergot d'obturation 89 (voir figures 10A et 10B), également disposés sensiblement dans le prolongement l'un de l'autre.

Entre l'ergot de centrage 87 et un autre ergot de centrage 91 solidaire de la partie supérieure 37 est interposé un ressort 93.

Un joint d'étanchéité 95 est de plus disposé autour de l'ergot d'obturation 89, entre le plateau 81 et la paroi 79.

A noter que le doigt 49 s'étend à l'intérieur de l'orifice 47' formé dans la partie supérieure 47 du bec 5.

Sur la figure 10A, on peut voir que lorsque la pression à l'intérieur du réservoir 1 du pulvérisateur dépasse un seuil prédéterminé fixé comme étant un seuil de sécurité, l'air situé à l'intérieur de ce réservoir soulève (voir flèches F3) le joint 95 et le plateau 81 à l'encontre de l'effet élastique exercé par le ressort 93, permettant ainsi l'échappement de cet air vers l'extérieur et la prévention de l'éclatement du réservoir 1.

On peut également décider volontairement de permettre à l'air situé à l'intérieur du réservoir 1 de s'échapper, par exemple en fin d'utilisation du pulvérisateur selon l'invention.

Dans ce cas, on agit sur le doigt d'actionnement 83 dans le sens indiqué par la flèche F4 de la figure 10B.

Ce faisant, le plateau 81 bascule de manière à prendre appui sur la paroi 79 par l'intermédiaire du pion d'appui 85.

Ce basculement a pour effet d'écarter le joint 95 de son siège formé sur la paroi 79, grâce à quoi de l'air peut s'échapper de ce réservoir, comme indiqué par les flèches F3.

A noter que lors de ce basculement, la course du plateau 81 est limitée par l'arrivée en butée des deux pions de centrage 87, 91 l'un contre l'autre.

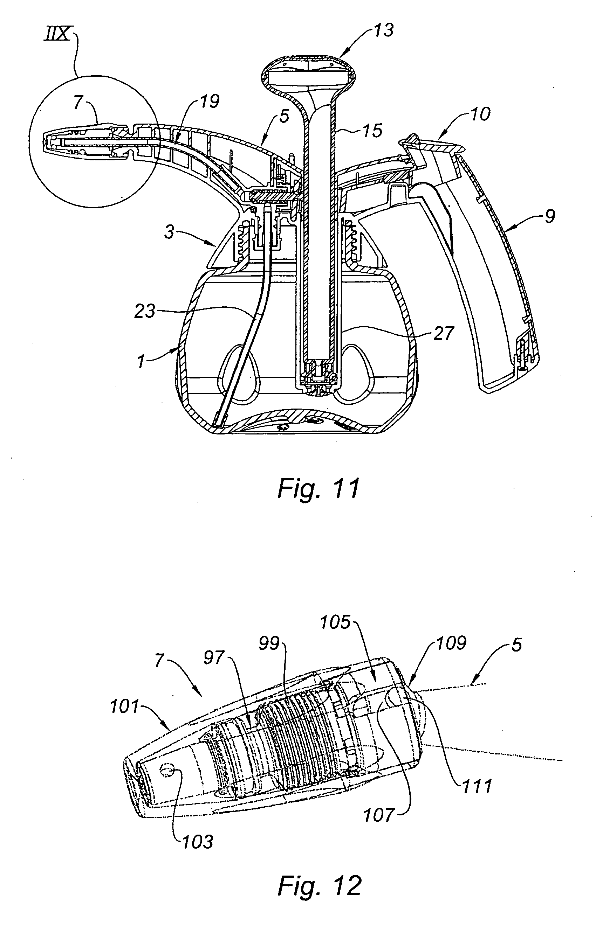

On a représenté sur la figure 11 une variante du pulvérisateur selon l'invention, dans laquelle la buse 7 est montée à l'extrémité du bec 5 par l'intermédiaire d'une liaison de type à rotule, permettant ainsi une orientation variable de cette buse 7 par rapport au bec 5.

Plus précisément, en se reportant à la figure 12, on peut voir que la buse 7 comprend un corps 97 muni d'un filetage 99 permettant la fixation par vissage d'un couvercle 101.

A son extrémité la plus éloignée du bec 5, le corps 97 comporte deux orifices 103 diamétralement opposés (un seul d'entre eux étant visible sur la figure 12).

A son extrémité la plus proche du bec 5, le corps 97 comporte une partie femelle 105 munie de deux rainures diamétralement opposées 107 (une seule d'entre-elles étant visible sur la figure 12).

Cette partie 105 coopère avec une partie 109 solidaire de l'extrémité du bec 5, cette partie 109 étant elle-même munie de deux ergots 111 diamétralement opposés chacun de ces ergots coopérant avec une rainure 107 correspondante.

De manière avantageuse, et comme cela est visible sur la figure 11, la durite 19 traverse l'extrémité sphérique du bec 5 et pénètre à l'intérieur du corps 97 de la buse 7, grâce à quoi une étanchéité totale est assurée pour la circulation du fluide de l'interrupteur hydraulique 17 jusqu'aux orifices 103 du corps 97 de la buse 7.

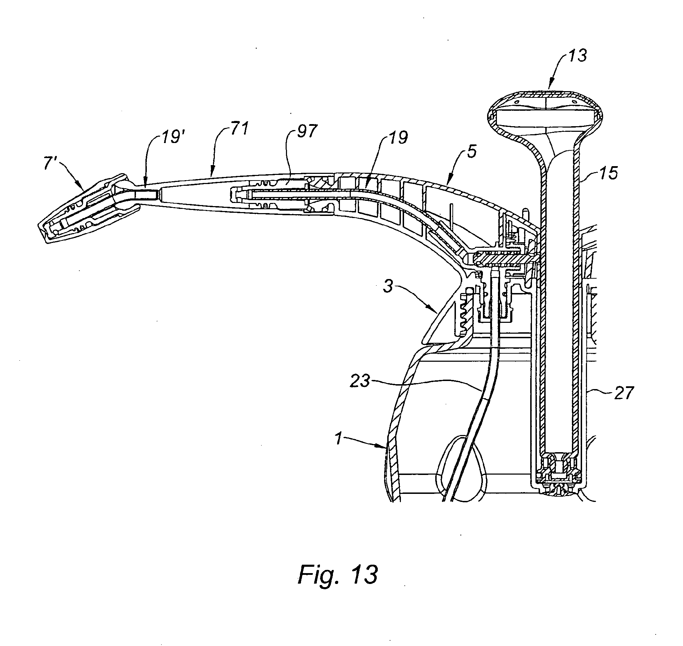

Sur la figure 13, on peut voir le pulvérisateur de la figure 11 sur le bec duquel on a monté une allonge 71.

Cette allonge est vissée sur le filetage 99 du corps 97 de la buse 7, jusqu'à venir en butée contre l'extrémité du bec 5, grâce à quoi cette allonge est maintenue en position fixe par rapport à ce bec. Une deuxième buse 7' est montée à l'extrémité de l'allonge 71.

Dans l'exemple représenté à la figure 13, cette buse 7' est reliée à l'allonge 71 par une liaison de type à rotule identique à celle qui a été décrite dans le cadre des figures 11 et 12, une deuxième durite 19' assurant une circulation de fluide étanche entre l'allonge 71 et la buse 7'.

Il va cependant de soi que la buse 7' pourrait être montée de manière fixe à l'extrémité de l'allonge 71, conformément à l'enseignement de la figure 1.

Le mode de fonctionnement et les avantages du pulvérisateur selon l'invention résultent directement de la description qui précède.

On commence par placer un liquide phytosanitaire à l'intérieur du réservoir 1 puis on visse le couvercle 3 sur ce réservoir.

On met alors ce réservoir en pression en exerçant une action de pompage sur la tige 15 au moyen du pommeau 13.

A noter que la forme asymétrique de ce pommeau en facilite la préhension.

Lorsque l'on souhaite réaliser une opération de pulvérisation, on exerce une pression sur l'organe d'actionnement 10, grâce à quoi l'interrupteur hydraulique 17 est placé en position d'ouverture, permettant l'expulsion du liquide phytosanitaire vers la buse 7 via le plongeur 3 et la durite 19.

Lorsque l'on souhaite bloquer l'organe d'actionnement 10 en position de pulvérisation, on peut agir sur l'organe de blocage 11.

La forme allongée du bec 5 permet d'atteindre des zones de pulvérisation difficilement accessibles.

La présence de la durite 19 permet d'assurer une parfaite étanchéité du trajet du fluide entre l'interrupteur hydraulique 17 et la buse 7, et ce quelque soit la forme (longueur, courbure) du bec 5.

La réalisation du bec 5 en deux parties 35, 37 permet un positionnement aisé de la durite 19 à l'intérieur de ce bec, celle-ci étant maintenue en place et correctement connectée d'une part à la buse 7 et d'autre part à l'interrupteur hydraulique 17 grâce aux nervures axiales et transversales 41, 53.

L'utilisation d'une allonge 71 permet de faciliter encore plus l'accès du pulvérisateur à des zones de traitement peu accessibles.

La liaison rotulaire de la buse 7 par rapport au bec 5 ou à l'allonge 71 permet de régler la direction de pulvérisation, et contribue ainsi à l'amélioration de l'ergonomie du pulvérisateur.

La collerette optionnelle 69 remplit la fonction de cache-herbicide, c'est-à-dire qu'elle permet, lorsque le produit situé dans le réservoir 1 est un herbicide, de pulvériser ce produit de manière ciblée sur des plantes à éliminer.

Lorsque cette collerette est transparente, l'utilisateur conserve une vision parfaite des végétaux à traiter.

La soupape 77 (voir figures 8 à 10B) est d'une conception extrêmement simple et peu coûteuse, et d'une facilité d'utilisation nettement supérieure à celle des soupapes à traction de la technique antérieure.

Bien entendu, la présente invention n'est nullement limitée aux modes de réalisation décrits en représentés fournis à titre d'exemples illustratifs et non limitatifs.

C'est ainsi par exemple que l'on peut envisager que l'allonge 71 puisse se ranger ailleurs qu'entre le réservoir 1 et la poignée 9, comme par exemple le long du réservoir 1 grâce à des moyens de clipsage appropriés.

## Revendications

1. Pulvérisateur portatif, du type comprenant un réservoir (1) et un couvercle (3) monté de manière amovible sur ce réservoir (1), ce couvercle (3) comprenant:
- des moyens (13, 15, 29, 31) de mise sous pression dudit réservoir (1),
- une conduite (23) plongeant dans ledit réservoir (1),
- une buse de pulvérisation (7, 7'), et
- un interrupteur hydraulique (17) apte à mettre de manière sélective ladite conduite (23) en communication hydraulique avec ladite buse (7, 7'),
ce pulvérisateur étant **caractérisé en ce que** ledit couvercle (3) comporte un bec (5) de forme allongée et courbe supportant ladite buse (7, 7') à son extrémité et **en ce qu'**il comprend une durite (19) s'étendant à l'intérieur dudit bec (5) de forme allongée et courbe et assurant la communication hydraulique dudit interrupteur (17) avec ladite buse (7).

2. Pulvérisateur selon la revendication 1, **caractérisé en ce que** ladite durite est formée par une conduite souple.

3. Pulvérisateur selon la revendication 1 ou 2, **caractérisé en ce que** ledit bec (5) est formé en deux parties (35, 37) comportant des nervures (41, 53) de maintien de ladite durite (19).

4. Pulvérisateur selon la revendication 3, **caractérisé en ce que** lesdites nervures comprennent d'une part des nervures axiales (41) de maintien latéral de ladite durite (19), et d'autre part des nervures transversales (53) de maintien axial de la connexion de ladite durite (19) avec ledit interrupteur hydraulique (17).

5. Pulvérisateur selon l'une quelconque des revendications 2 à 4, **caractérisé en ce que** ledit bec (5) et ladite buse (7) présentent des formes complémentaires définissant une rotule, et **en ce que** ladite durite (19) traverse cette rotule.

6. Pulvérisateur selon l'une quelconque des revendications 2 à 5, **caractérisé en ce qu'**il comprend une allonge (71) apte à être interposée de manière étanche entre ledit bec (5) et ladite buse (7), ladite durite (19) débouchant à l'intérieur de cette allonge (71).

7. Pulvérisateur selon la revendication 6, **caractérisé en ce que** ladite allonge (71) est rangeable soit entre une poignée de préhension (9) dudit pulvérisateur et ledit réservoir (1), soit le long dudit réservoir (1).

8. Pulvérisateur selon l'une des revendications 6 ou 7, **caractérisé en ce que** ladite allonge (71) et ladite buse (7) présentent des formes complémentaires définissant une deuxième rotule, et **en ce qu'**une deuxième durite (19') traverse cette deuxième rotule.

9. Pulvérisateur selon l'une quelconque des revendications précédentes, **caractérisé en ce qu'**il comprend une collerette (69) de protection montée de manière amovible autour de ladite buse (7).

10. Pulvérisateur selon la revendication 9, **caractérisé en ce que** ladite collerette est rangeable sur ledit bec (5) de manière que sa concavité soit orientée vers ledit réservoir (1).

11. Pulvérisateur selon l'une quelconque des revendications précédentes, **caractérisé en ce que** lesdits moyens de mise sous pression comprennent une tige de pompage (15) munie d'un pommeau asymétrique (13).

12. Pulvérisateur selon l'une quelconque des revendications précédentes, **caractérisé en ce qu'**il comprend une soupape de sécurité à bascule (77) montée sur ledit couvercle (3).

13. Pulvérisateur selon la revendication 12, **caractérisé en ce que** ladite soupape (77) comprend un plateau (81) supportant d'une part, au voisinage de l'une de ses extrémités, disposés de part et d'autre de ce plateau et sensiblement dans le prolongement l'un de l'autre, un doigt d'actionnement (49) et un pion d'appui (85), et d'autre part, au voisinage d'une autre extrémité dudit plateau, disposés de part et d'autre de celui-ci et sensiblement dans le prolongement l'un de l'autre, un ergot de centrage (87) et un ergot d'obturation (89), ledit ergot d'obturation (89) coopérant par l'intermédiaire d'un joint d'étanchéité (95) avec un siège de soupape débouchant dans ledit réservoir (1) et ledit ergot de centrage (87) coopérant avec un ressort (93) de rappel dudit plateau (81) vers la position dans laquelle ledit ergot d'obturation (89) comprime ledit joint (95) contre ledit siège.

## Claims

1. A portable sprayer of the type comprising a reservoir (1) and a cover (3) mounted in a removable manner on said reservoir (1), said cover (3) comprising:
- means (13, 15, 29, 31) for pressurizing said reservoir (1) ;
- a duct (23) extending down into said reservoir (1) ;
- a spray nozzle (7, 7') ; and
- a hydraulic switch (17) capable of selectively bringing said duct (23) into hydraulic communication with said nozzle (7, 7') ;
said sprayer being **characterized in that** said cover (3) comprises an elongate and curved spout (5) bearing said nozzle (7, 7') at its end and **in that** it comprises a hose (19) extending inside said elongate and curved spout (5) and providing the hydraulic communication of said switch (17) with said nozzle (7).

2. The sprayer as claimed in claim 1, **characterized in that** said hose is formed by a flexible tube.

3. The sprayer as claimed in claim 1 or 2, **characterized in that** said spout (5) is formed in two parts (35, 37) comprising ribs (41, 53) for holding said hose (19).

4. The sprayer as claimed in claim 3, **characterized in that** said ribs comprise on the one hand axial ribs (41) for laterally holding said hose (19), and on the other hand transverse ribs (53) for axially holding the connection of said hose (19) with said hydraulic switch (17).

5. The sprayer as claimed in any one of claims 2 to 4, **characterized in that** said spout (5) and said nozzle (7) have complementary shapes defining a ball joint, and **in that** said hose (19) passes through this ball joint.

6. The sprayer as claimed in any one of claims 2 to 5, **characterized in that** it comprises an extension (71) capable of being interposed in a sealed manner between said spout (5) and said nozzle (7), the open end of said hose (19) being inside said extension (71).

7. The sprayer as claimed in claim 6, **characterized in that** said extension (71) can be stored either between a handle (9) for gripping said sprayer and said reservoir (1), or along said reservoir (1).

8. The sprayer as claimed in one of claims 6 or 7, **characterized in that** said extension (71) and said nozzle (7) have complementary shapes defining a second ball joint, and **in that** a second hose (19') passes through this second ball joint.

9. The sprayer as claimed in any one of the previous claims, **characterized in that** it comprises a protective collar (69) mounted in a removable manner around said nozzle (7).

10. The sprayer as claimed in claim 9, **characterized in that** said collar can be stored on said spout (5) in such a way that its concavity is facing said reservoir (1).

11. The sprayer as claimed in any one of previous claims, **characterized in that** said pressurizing means comprise a pump rod (15) provided with an asymmetric knob (13).

12. The sprayer as claimed in any one of the previous claims, **characterized in that** it comprises a tilting safety valve (77) mounted on said cover (3).

13. The sprayer as claimed in claim 12, **characterized in that** said valve (77) comprises a plate (81) having on the one hand, close to one of its ends, an actuation finger (49) and a bearing pin (85) positioned on either side of this plate and substantially in line with one another, and on the other hand, close to another end of said plate, a centering lug (87) and a blocking lug (89) positioned on either side of this plate and substantially in line with one another, said blocking lug (89) cooperating by means of a gasket (95) with a valve seat opening into said reservoir (1) and said centering lug (87) cooperating with a spring (93) for returning said plate (81) to the position in which said blocking lug (89) compresses said gasket (95) against said seat.

## Patentansprüche

1. Tragbare Sprühvorrichtung des Typs, der einen Behälter (1) und einen Deckel (3), der abnehmbar auf diesen Behälter (1) montiert ist, aufweist, wobei dieser Deckel (3) folgendes enthält:
- Mittel (13, 15, 29, 31) zum Druckbeaufschlagen des Behälters (1),
- eine Leitung (23), die in den Behälter (1) taucht,
- eine Sprühdüse (7, 7') und
- einen hydraulischen Schalter (17), der selektiv die Leitung (23) mit
der Düse (7, 7') in hydraulische Verbindung bringen kann,
wobei die Sprühvorrichtung **dadurch gekennzeichnet ist, dass** der Deckel (3) einen Schnabel (5) mit länglicher und gebogener Form, der die Düse (7,7') an seinem Ende trägt, aufweist, und dass sie einen Schlauch (19) aufweist, der sich im Inneren des Schnabels (5) mit länglicher und gebogener Form erstreckt und die hydraulische Kommunikation des Schalters (17) mit der Düse (7) sicherstellt.

2. Sprühvorrichtung nach Anspruch 1, **dadurch gekennzeichnet, dass** der Schlauch aus einer biegsamen Leitung gebildet ist.

3. Sprühvorrichtung nach Anspruch 1 oder 2, **dadurch gekennzeichnet, dass** der Schnabel (5) aus zwei Teilen (35, 37) gebildet ist, die Rippen (41, 53) zum Halten des Schlauchs (19) aufweisen.

4. Sprühvorrichtung nach Anspruch 3, **dadurch gekennzeichnet, dass** die Rippen einerseits axiale Rippen (41) zum seitlichen Halten des Schlauchs (19) und andererseits Querrippen (53) zum axialen Halten der Verbindung des Schlauchs (19) mit dem hydraulischen Schalter (17) aufweisen.

5. Sprühvorrichtung nach einem der Ansprüche 2 bis 4, **dadurch gekennzeichnet**, das der Schnabel (5) und die Düse (7) komplementäre Formen, die ein Kugelgelenk bilden, aufweisen, und dass der Schlauch (19) dieses Kugelgelenk durchquert.

6. Sprühvorrichtung nach einem der Ansprüche 2 bis 5, **dadurch gekennzeichnet, dass** sie eine Verlängerung (71) aufweist, die dicht zwischen dem Schnabel (5) und der Düse (7) eingefügt werden kann, wobei der Schlauch (19) in das Innere dieser Verlängerung (71) mündet.

7. Sprühvorrichtung nach Anspruch 6, **dadurch gekennzeichnet, dass** die Verlängerung (71) entweder zwischen einem Griff (9) der Sprühvorrichtung und dem Behälter (1) oder entlang des Behälters (1) verstaut werden kann.

8. Sprühvorrichtung nach einem der Ansprüche 6 oder 7, **dadurch gekennzeichnet, dass** die Verlängerung (71) und die Düse (7) komplementäre Formen bilden, die ein zweites Kugelgelenk bilden, und dass ein zweiter Schlauch (19') dieses zweite Kugelgelenk durchquert.

9. Sprühvorrichtung nach einem der vorhergehenden Ansprüche, **dadurch gekennzeichnet, dass** sie einen Schutzkragen (69) aufweist, der abnehmbar um die Düse (7) montiert ist.

10. Sprühvorrichtung nach Anspruch 9, **dadurch gekennzeichnet, dass** der Kragen auf der Düse (5) derart verstaut werden kann, dass seine Konkavität zu dem Behälter (1) gerichtet ist.

11. Sprühvorrichtung nach einem der vorhergehenden Ansprüche, **dadurch gekennzeichnet, dass** die Mittel zum Druckbeaufschlagen einen Pumpschaft (15) aufweisen, der mit einem asymmetrischen Knauf (13) versehen ist.

12. Sprühvorrichtung nach einem der vorhergehenden Ansprüche, **dadurch gekennzeichnet, dass** sie ein Sicherheitsventil mit Ein-Ausschalter (77), der auf den Deckel (3) montiert ist, aufweist.

13. Sprühvorrichtung nach Anspruch 12, **dadurch gekennzeichnet, dass** das Ventil (77) eine Platte (81) aufweist, die einerseits in der Nähe eines ihrer Enden, zu beiden Seiten dieser Platte und im Wesentlichen in der Verlängerung voneinander angeordnet einen Betätigungsfinger (49) und einen Auflagestift (85) und, andererseits, in der Nähe eines anderen Endes der Platte, zu beiden Seiten dieser und im Wesentlichen in der Verlängerung voneinander angeordnet einen Zentrierdorn (87) und einen Verschlussdorn (89) aufweist, wobei der Vorschussdorn (89) über eine Dichtung (95) mit einem Ventilsitz, der in den Behälter (1) mündet, zusammenwirkt, und wobei der Zentrierdorn (87) mit einer Feder (93) zum Zurückholen der Platte (81) zu der Position, in der der Verschlussdorn (89) die Dichtung (95) gegen den Sitz drückt, zusammenwirkt.
